# FASCICULE DE BREVET EUROPEEN

(11) **EP 2 556 192 B1**
(45) Date de publication et mention de la délivrance du brevet: **21.01.2015**
(21) Numéro de dépôt: 11720170.7
(22) Date de dépôt: 22.03.2011
(51) Int. Cl.: D21H 17/33, D21H 17/34, D21H 19/38, D21H 19/44, D21H 19/46, D21H 19/48, D21H 21/52, C08L 9/00, C08L 9/06, C08L 9/08, C08L 9/10, C08L 25/04, C08L 25/08, C08L 25/10, D21H 19/58

(54) **UTILISATION D'UN LATEX DE STYRENE ET DE TAILLE DE 100 NM COMME AGENT RHEOLOGIQUE DANS UNE SAUCE DE COUCHAGE PAPETIERE, SAUCE DE COUCHAGE ET PROCÉDÉ D'OBTENTION D'UN PAPIER REVÊTU DE CETTE SAUCE**
VERWENDUNG EINES STRYROL-LATEX MIT EINER PARTIKELGRÖSSE VON 100 NM ALS RHEOLOGISCHES MITTEL IN EINER PAPIERBESCHICHTUNGSZUSAMMENSETZUNG, EINE BESCHICHTUNGSZUSAMMENSETZUNG UND VERFAHREN ZUM ERZEUGEN EINES BESCHICHTETEN PAPIERS MIT DIESER ZUSAMENSETZUNG
USE OF A STYRENE LATEX HAVING A SIZE OF 100 NM AS RHEOLOGICAL AGENT IN A PAPER COATING COMPOSITION, A COMPOSITION AND PROCESS FOR OBTAINING A PAPER COATED WITH THIS COMPOSITION

(30) Priorité: 07.04.2010 FR 1052605
(43) Date de publication de la demande: 13.02.2013
(73) Titulaire: Coatex S.A.S, 69730 Genay (FR)
(72) Inventeur: SOUZY, Renaud, F-69300 Caluire et Cuire (FR); DUPONT, François, F-69004 Lyon (FR)
(74) Mandataire: Fiorucci, Hélène
(86) Numéro de dépôt international: PCT/IB2011/000630
(87) Numéro de publication internationale: WO 2011/124958

(56) Documents cités:
- WO-A1-03/044273
- WO-A1-2008/069538
- GB-A- 1 590 399
- US-A- 4 134 872
- US-A- 5 420 190
- US-A1- 2008 097 019
- US-A1- 2010 055 446
- US-A1- 2010 080 919

## Description

La présente invention concerne le domaine du papier et porte plus particulièrement sur certains additifs connus sous l'expression de "modificateurs de rhéologie". Ces derniers entrent dans la formulation des sauces de couchage, qui sont des formulations aqueuses destinées à être appliquées à la surface de la feuille de papier.

L'invention concerne plus précisément la mise en oeuvre de modificateurs de rhéologie ayant la propriété d'augmenter la viscosité de ces sauces sous bas gradient de cisaillement, et de la diminuer à haut gradient. Ce compromis correspond à l'obtention d'une sauce à la fois manipulable (augmentation de la viscosité à bas gradient), et exploitable en couchage à haute vitesse ou extrait sec élevé (diminution de la viscosité à haut gradient, pour contrebalancer l'augmentation de la pression de lame).

Les modificateurs de rhéologie selon la présente invention, outre leur simplicité de fabrication, conduisent à des performances encore jamais atteintes avec les modificateurs de rhéologie de l'art antérieur : si ces derniers continuaient à épaissir - même faiblement- la sauce sous haut gradient de cisaillement, les modificateurs de rhéologie selon l'invention se comportent comme des agents fluidifiants dans cette gamme de contrainte.

Comme on le verra par la suite, cette dernière propriété est particulièrement avantageuse dans les procédés de couchage à haute vitesse (1000 à 2000 m / s) ou ceux mettant en oeuvre des sauces à extrait sec élevé (supérieur à 70 % de leurs poids total) ou encore ceux caractérisés par une faible dépose voire une combinaison de ces procédés. De plus, ces résultats peuvent être obtenus en substituant directement le modificateur de rhéologie selon l'invention, à une partie du liant principal de la sauce, composé particulièrement onéreux : le coût de la formulation en est largement amélioré.

Dans le cadre de la fabrication de la feuille de papier par couchage, on dépose sur la surface du papier support une composition aqueuse dénommée "sauce de couchage" dont la fonction est de conférer à ladite feuille un certain nombre de propriétés, comme l'opacité, la brillance, la blancheur ou encore l'imprimabilité par les procédés d'impression offset ou héliogravure.

Ces sauces de couchage sont constituées d'eau, d'une ou plusieurs charges minérales, telles que le carbonate de calcium naturel ou synthétique, le kaolin, le talc, ou encore l'oxyde de titane, d'un ou plusieurs liants hydrosolubles ou non, d'origine naturelle (tel que l'amidon, la caséine, la carboxyméthylcellulose - CMC), et / ou synthétique (tel que les émulsions de latex styrène-butadiène, styrène-acrylate, les copolymères vinyliques), ainsi que de divers additifs (tels que des dispersants, des agents rétenteurs d'eau, des azurants optiques, etc...).

Parmi ces additifs, il est une catégorie particulière qui permet d'optimiser les caractéristiques rhéologiques de la sauce, en relation avec les paramètres du procédé de couchage et avec les propriétés recherchées pour ladite sauce : celle des modificateurs de rhéologie. Comme indiqué par leur nom, ces produits ont pour fonction de réguler la rhéologie de la sauce, c'est-à-dire d'ajuster la viscosité de celle-ci, en fonction de la contrainte qui lui est appliquée.

A cet égard, il est tout d'abord important de disposer d'une sauce aisément pompable et filtrable dans les circuits d'alimentation du procédé de couchage et ne présentant pas de tendance à la formation de mousses ou d'éclaboussures ainsi qu'une sédimentation trop rapide. Cette exigence correspond à une augmentation de la viscosité sous bas gradient de cisaillement, ou viscosité Brookfïeld™ mesurée à 100 tours / minute et à 25°C avec le dispositif du même nom, sans quoi la sauce est trop liquide.

Une autre caractéristique rhéologique importante est la viscosité sous haut gradient de cisaillement, telle qu'exprimée à travers une valeur de viscosité ACAV à 25°C mesurée dans un viscosimètre capillaire où la sauce peut subir des gradients de cisaillements élevés (de 10⁵ à 3 x 10⁶ s⁻¹) du même ordre de grandeur que ceux observés pendant le procédé de couchage lors de l'application de la lame de couchage raclant l'excès de sauce déposée. La viscosité sous haut gradient de cisaillement est un déterminant de la pression de lame à exercer. Plus la viscosité sous haut gradient de cisaillement est élevée, plus la pression de lame doit être élevée pour le contrôle du poids de couche déposée.

Or l'augmentation de l'extrait sec des sauces de couchage et l'augmentation des vitesses de couchages sont des tendances observées depuis quelques années car elles ont des avantages économiques et/ou qualitatifs. En effet, une augmentation de l'extrait sec de la sauce de couchage permet une réduction des coûts: on diminue ainsi la quantité d'énergie nécessaire au séchage de la sauce. Cette augmentation permet aussi d'améliorer la qualité des papiers : on réduit la pénétration de la sauce dans le papier support, ce qui est favorable au développement de la brillance. Mais cette augmentation de l'extrait sec conduit à une augmentation de la viscosité sous cisaillement et par conséquence à une hausse des pressions de lame nécessaires.

Les vitesses de couchage plus élevées génèrent quand à elles une augmentation de la force hydraulique sur la lame et ainsi de la pression à exercer. Les augmentations des pressions de lame peuvent alors atteindre des niveaux inacceptables et généralement accompagnés de débordements de sauces connus sous les termes de « baves » ou « perles ».

Il devient donc utile pour l'homme du métier de disposer d'un modificateur de rhéologie selon l'invention permettant d'atteindre la viscosité sous bas gradient de cisaillement nécessaire et de diminuer la viscosité sous haut gradient de façon à exploiter les avantages d'une hausse de la vitesse ou d'une hausse de l'extrait sec des sauces de couchage sans dépasser les limites de son procédé et en évitant la formation des débordements. Cette problématique est relatée dans le document WO 84/04491.

En matière de modificateurs de rhéologie selon l'art antérieur, on distingue les produits d'origine naturelle (dont la carboxyméthylcellulose -ou CMC- est la plus répandue) et ceux d'origine synthétique. Parmi ces derniers, les plus connus sont des polymères acryliques dont ceux de type ASE (Alkali Swellable Emulsion ou émulsion alcali soluble) et ceux de type HASE (Hydrophobically modified Alkali Swellable Emulsion ou émulsion alcali soluble et modifiée hydrophobiquement). Les premiers désignent des produits en émulsion qui sont des homopolymères ou des copolymères de l'acide (méth)acrylique avec un ester de ces acides, et les seconds désignent des produits en émulsion qui sont des copolymères à base d'acide (méth)acrylique, d'un ester de ces acides et d'un monomère hydrophobe.

Tous ces modificateurs de rhéologie se comportent comme des épaississants, quel que soit le niveau de contrainte ou de cisaillement envisagé. La CMC ainsi que les polymères de type ASE ou HASE apparus plus récemment, augmentent la viscosité Brookfield, mais aussi et systématiquement la viscosité sous haut gradient de cisaillement.

Ainsi le document EP 1 611 238 énonce-t-il cette propriété de manière générale pour les polymères de type ASE et HASE, et de manière préférentielle pour un épaississant associatif comportant moins de 10 % en poids de monomère hydrophobe. Notons qu'un tel produit était déjà divulgué dans le document WO 99/33890.

Toutefois l'ensemble de ces documents ne parle que de limiter l'augmentation relative de viscosité sous contrainte élevée : aucun des additifs connus à ce jour ne permet de véritablement diminuer la viscosité sous haut gradient de cisaillement, par rapport à la même sauce ne contenant pas l'additif en question. Aussi, aucun des modificateurs de rhéologie / épaississants de l'art antérieur ne donne entière satisfaction à l'homme du métier.

Il est par ailleurs décrit la possibilité de diminuer la viscosité sous haut gradient de cisaillement par un choix judicieux et une combinaison des tailles des particules du latex synthétique principal (voir notamment les documents WO 84/04491 et WO 02 / 070615) selon des modèles bi ou tri modaux. La Demanderesse a pu confirmer la baisse des viscosités sous hauts cisaillements en reproduisant les conditions précédentes par l'ajout à la sauce de couchage de latex dit secondaires de tailles et de compositions variables. Ces ajouts ont recréé les conditions avantageuses de la bi ou de la tri-modalité de la répartition granulométrique des latex liants permettant une baisse de la viscosité sous hauts cisaillements.

Mais, comme il est dit plus haut, l'homme du métier souhaite dans le même temps une augmentation de la viscosité sous bas taux de cisaillements bien décrite par la mesure de viscosité Brookfield™. Or la Demanderesse a constaté que les latex dits secondaires décrits dans l'art antérieur conduisent à une baisse de la viscosité sous bas taux de cisaillement concomitante à la baisse de la viscosité sous haut gradient de cisaillement.

Or, de façon surprenante, certains latex secondaires très particuliers à base majoritaire en styrène et d'une taille de particules comprise entre 50 nm et 150 nm, sont en mesure de satisfaire la demande de l'homme du métier pour une baisse des viscosités sous hauts cisaillements accompagnée d'une hausse de la viscosité sous bas taux de cisaillements.

La Demanderesse a su identifier et démontrer que c'est la combinaison de la nature chimique du latex et de sa granulométrie qui conduit à un tel résultat (dans toute la présente Demande, les tailles de particules de latex sont déterminées par des méthodes bien connues de Diffusion Dynamique de la Lumière).

De manière tout à fait surprenante et particulièrement avantageuse, ces produits permettent non seulement d'augmenter la viscosité Brookfield™, mais aussi de diminuer la viscosité ACAV des sauces. Il ne s'agit plus de minimiser l'augmentation relative de la viscosité sous haut gradient de cisaillement, mais véritablement de diminuer celle-ci par rapport à la même sauce ne contenant pas l'additif en question : un tel résultat n'avait encore jamais été atteint. Il est bien entendu que l'augmentation et la diminution de viscosité susmentionnées sont relatives aux valeurs de viscosité obtenues pour la même sauce, mais ne contenant pas le latex selon la présente invention.

Ces latex s'avèrent donc particulièrement intéressants pour réaliser des couchages à haute vitesse ou travailler avec des sauces de couchage présentant un extrait sec élevé. De plus, ils sont largement connus et décrits dans la littérature : très simples à fabriquer, leur coût de production est relativement faible. De plus, la Demanderesse est parvenue à démontrer que ces latex, tout en contribuant positivement à la rhéologie de la sauce comme évoqué plus haut, pouvaient être utilisés en remplacement d'une partie du liant principal, constituant particulièrement onéreux.

Aussi, un premier objet de l'invention consiste en l'utilisation d'un latex (a) comme agent permettant d'augmenter la viscosité d'une sauce sous bas gradient de cisaillement et de la diminuer sous haut gradient de cisaillement,
étant entendu que ladite sauce contient de l'eau, (b) au moins un liant, (c) éventuellement au moins un agent modificateur de rhéologie différent dudit latex (a), (d) éventuellement au moins un additif différent desdits composés précités, et (e) au moins une matière minérale,
ledit latex (a) étant caractérisé en ce que:
1) il est constitué d'au moins 95 % en poids de styrène par rapport à son poids total, très préférentiellement de 100 % en poids de styrène par rapport à son poids total, et
2) présente une taille de particules comprise entre 50 et 150 nm, préférentiellement entre 60 et 120 nm.

Cette utilisation est aussi caractérisée en ce que ledit latex, lorsqu'il n'est pas constitué que de styrène, contient de 0,01 à 5 % en poids par rapport à son poids total, d'au moins un monomère choisi parmi le butadiène, l'acrylonitrile, l'acrylamide, les N-méthylolacrylamides, l'acétate de vinyle, l'acide acrylique, les acrylates d'alkyle et préférentiellement parmi les (méth)acrylates d'éthyle et de butyle, les (méth)acrylates d'hydroxyalkyle, ou leurs mélanges, et choisi très préférentiellement parmi les (méth)acrylates d'éthyle et de butyle et leurs mélanges.

Cette utilisation est aussi caractérisée en ce que la sauce contient :
- une masse d'eau comprise entre 20 % et 50 % du poids total de ladite sauce. préférentiellement entre 25 % et 45 %,
- et, exprimée en parts en poids sec pour 100 parts en poids sec de matière minérale (e):
   (a) 0,1 part à 4 parts en poids sec dudit latex (a) pour 100 parts en poids sec de matière minérale (e), préférentiellement de 0,5 à 4,0 parts.
   (b) de 3 parts à 20 parts en poids sec dudit liant (b) pour 100 parts en poids sec de matière minérale (e), préférentiellement de 5 parts à 17 parts,
   (c) de 0 part à 1 part en poids sec dudit au moins un agent modificateur de rhéologie (c) pour 100 parts en poids sec de matière minérale (c), préférentiellement de 0 à 0,5 part
   (d) de 0 part à 1 part en poids sec dudit au moins un additif (d) différent des composés précités pour 100 parts en poids sec de matière minérale (e), préférentiellement de 0 à 0,5 part.

Cette utilisation est aussi caractérisée en ce que ledit liant (b) est choisi parmi les latex styrène-butadiène, les styrène-acrylique ou; les acétates de vinyle.

Cette utilisation est aussi caractérisée en ce que ledit agent modificateur de rhéologie (c) est choisi parmi les épaississants constitués des copolymères de l'acide (méth)acrylique avec un ester de ces acides, et des copolymères à base d'acide (méth)acrylique, d'un ester de ces acides et d'un monomère hydrophobe, les épaississants à base d'urée, de gélatine, les épaississants à base de vinyle pyrrolidone ou; les épaississants à base de cellulose éventuellement modifiée.

Cette utilisation est aussi caractérisée en ce que l'additif (d) est choisi parmi l'amidon, la caséine, le stéarate de calcium, les azurants optiques et les colorants, l'alcool polyvinylique, les anti-mousses ou, les insolubilisants.

Cette utilisation est aussi caractérisée en ce que la matière minérale (e) présente une répartition granulométrique telle qu'au moinse 60 % en poids des particules ont un diamètre inférieur à 2 µm.

Dans une première variante, lorsque la matière minérale (e) présente une répartition granulométrique telle qu'au moinse 90 % en poids des particules ont un diamètre inférieur à 2 µm, cette utilisation est aussi caractérisée en ce que le latex présente une taille de particules comprise entre 60 nm et 100 nm.

Dans une seconde variante, lorsque la matière minérale (e) présente une répartition granulométrique telle qu'au moins 95 % en poids des particules ont un diamètre inférieur à 2 µm, cette utilisation est aussi caractérisée en ce que le latex présente une taille de particules comprise entre 80 nm et 120 nm.

Cette utilisation est aussi caractérisée en ce que la matière minérale (e) est choisie parmi les carbonates de calcium naturel et précipité, le talc ou le kaolin, et est préférentiellement un carbonate de calcium naturel.

Un autre objet de l'invention consiste en un procédé de fabrication d'une sauce de couchage, par mélange entre de l'eau et un latex (a), au moins un liant (b), éventuellement au moins un agent modificateur de rhéologie (c) différent dudit latex (a), éventuellement aussi au moins un additif (d) différent des composés précités, et au moins une matière minérale (e), ledit latex (a) étant caractérisé en ce que:
1) il est constitué d'au moins 95 % en poids de styrène par rapport à son poids total, préférentiellement d'au moins 98 % en poids de styrène par rapport à son poids total, très préférentiellement de 100 % en poids de styrène par rapport à son poids total,
2) il présente une taille de particules comprise entre 50 et 150 mm, préférentiellement entre 60 et 120 nm.

Ce procédé est aussi caractérisé en ce que ledit latex, lorsqu'il n'est pas constitué que de styrène, contient de 0,01 à 5 % en poids par rapport à son poids total, d'au moins un autre monomère que le styrène choisi parmi le butadiène, l'acrylonitrile, l'acrylmide, les N-méthylolacrylamides, l'acétate de vinyle, l'acide acrylique, les acrylates d'alkyle et préférentiellement parmi les (méth)acrylatas d'éthyle et de butyle, les (méth)acrylates d'hydroxyalkyle, ou leurs mélanges, et choisi très préférentiellement parmi les (méth)acrylates d'éthyle et de butyle et leurs mélanges.

Ce procédé est aussi caractérisé en ce qu'il met en oeuvre le mélange :
- d'une masse d'eau comprise entre 20 % et 50 % du poids total de ladite sauce, préférentiellement entre 25 % et 45 %,
- et de, exprimée en parts en poids sec pour 100 parts en poids sec de matière minérale (e) :
   a) 0,1 part à 4 parts en poids sec dudit latex (a) pour 100 parts en poids sec de matière minérale (e), préférentiellement de 0,5 à 4,0 parts,
   b) de 3 parts à 20 parts en poids sec dudit liant (b) pour 100 parts en poids sec de matière minérale (e), préférentiellement de 5 parts à 17 parts,
   c) de 0 part à 1 part en poids sec dudit au moins un agent modificateur de rhéologie (c) pour 100 parts en poids sec de matière minérale (e) préférentiellement de 0 à 0,5 part,
   d) de 0 part à 1 part en poids sec dudit au moins un additif (d) différent des composés précités pour 100 parts en poids sec de matière minérale (e), préférentiellement de 0 à 0,5 part.

Ce procédé est aussi caractérisé en ce que le liant (b) est choisi parmi les latex styrène-butadiène, les styrène-acrylique ou, les acétates de vinyle.

Ce procédé est aussi caractérisé en ce que ledit agent modificateur de rhéologie (c) est choisi parmi les épaississants constitués des copolymères de l'acide (méth)acrylique avec un ester de ces acides, et des copolymères à base d'acide (méth)acrylique, d'un ester de ces acides et d'un monomère hydrophobe, les épaississants à base d'urée, de gélatine, les épaississants à base de vinyle pyrrolidone, ou les épaississants à base de cellulose éventuellement modifiée.

Ce procédé est aussi caractérisé en ce que ledit additif (d) est choisi parmi l'amidon, la caséine, le stéarate de calcium, les azurants optiques et les colorants, l'alcool polyvinylique, les anti-mousses ou, les insolubilisants.

Ce procédé est aussi caractérisé en ce que la matière minérale (e) présente une répartition granulométrique telle qu'au moinse 60 % en poids des particules ont un diamètre inférieur à 2 µm.

Dans une première variante, lorsque la matière minérale (e) présente une répartition granulométrique telle qu'au moins 90 % en poids des particules ont un diamètre inférieur à 2 µm, ce procédé est aussi caractérisé en ce que le latex présente une taille de particules comprise entre 60 nm et 100 nm.

Dans une seconde variante, lorsque la matière minérale (e) présente une répartition granulométrique telle qu'au moins 95 % au moins en poids des particules ont un diamètre inférieur à 2 µm, ce procédé est aussi caractérisé en ce que le latex présente une taille de particules comprise entre 80 nm et 120 nm.

Ce procédé est aussi caractérisé en ce que la matière minérale (e) est choisie parmi les carbonates de calcium naturel et précipité, le talc ou le kaolin, et est préférentiellement un carbonate de calcium naturel.

Un troisième objet de l'invention consiste en une sauce de couchage contenant de l'eau un latex (a), au moins un liant (b), éventuellement au moins un autre agent modificateur de rhéologie (c) que le présent latex, éventuellement aussi au moins un autre additif (d) différent des composés précités, au moins une matière minérale (e), ledit latex (a) étant caractérisé en ce que :
1) il est constitué d'au moins 95 % en poids de styrène par rapport à son poids total, préférentiellement d'au moins 98 % en poids de styrène par rapport à son poids total, très préférentiellement de 100 % en poids de styrène par rapport à son poids total, et
2) il présente une taille de particules comprise entre 50 et 150 nm, préférentiellement entre 60 et 120 nm.

Cette sauce est aussi caractérisée en ce que ledit latex, lorsqu'il n'est pas constitué exclusivement de styrène, contient de 0,01 à 5 % en poids par rapport à son poids total, d'au moins un monomère choisi parmi le butadiène, l'acrylonitrile, l'acrylamide, les N-méthylolacrylamides, l'acétate de vinyle, l'acide acrylique, les acrylates d'alkyle et préférentiellement choisi parmi les (méth)acrylates d'éthyle et de butyte, les (méth)acrylates d'hydroxyalkyle, ou leurs mélanges, et choisi très préférentiellement parmi les (méth)acrylates d'éthyle et de butyle et leurs mélanges.

Cette sauce est aussi caractérisée en ce qu'elle contient :
- une masse d'eau comprise entre 20 % et 50 % du poids total de ladite sauce, préférentiellement entre 25 % et 45 %,
- et de, exprimée en parts en poids sec pour 100 parts en poids sec de matière minérale (e) :
   a) 0,1 part à 4 parts en poids sec dudit latex (a) pour 100 parts en poids sec de matière minérale (e). préférentiellement de 0,5 à 4,0 parts,
   b) de 3 parts à 20 parts en poids sec dudit liant (b) pour 100 parts en poids sec de matière minérale (e), préférentiellement de 5 parts à 17 parts.
   c) de 0 part à 1 part en poids sec dudit au moins un agent modificateur de rhéologie (c) pour 100 parts en poids sec de matière minérale (e), préférentiellement de 0 à 0,5 part.
   d) de 0 part à 1 part en poids sec dudit au moins un additif (d) différent des composés précités pour 100 parts en poids sec de matière minérale préférentiellement de 0 à 0,5 part.

Cette sauce est aussi caractérisée en ce que ledit liant (b) est choisi les latex styrène-butadiène, les styrène-acrylique ou les acétates de vinyle.

Cette sauce est aussi caractérisée en ce que ledit agent modificateurs de rhéologie (c) est choisie parmi les épaississants constitués des copolymères de l'acide (méth)acrylique avec un ester de ces acides, et des copolymères à base d'acide (méth)acrylique, d'un ester de ces acides et d'un monomère hydrophobe, les épaississants à base d'urée, de gélatine, les épaississants à base de vinyle pyrrolidone, ou les épaississants à base de cellulose éventuellement modifiée.

Cette sauce est aussi caractérisée en ce que ledit additif (d) est choisi parmi l'amidon, la caséine, le stéarate de calcium, les azurants optiques et les colorants, l'alcool polyvinylique, les anti-mousses ou les insolubilisants.

Cette sauce est aussi caractérisée en ce que ladite matière minérale (e) présente une répartition granulométrique telle qu'au moins 60 % en poids des particules ont un diamètre inférieur à 2 µm.

Dans une première variante, lorsque la matière minérale (e) présente une répartition granulométrique telle qu'au moins 90 % en poids des particules ont un diamètre inférieur à 2 µm, cette sauce est aussi caractérisée en ce que le latex présente une taille de particules comprise entre 60 nm et 100 nm.

Dans une seconde variante, lorsque la matière minérale (e) présente une répartition granulométrique telle qu'au moins 95 % en poids des particules ont un diamètre inférieur à 2 µm, cette sauce est aussi caractérisée en ce que le latex présente une taille de particules comprise entre 80 nm et 120 nm.

Cette sauce est aussi caractérisée en ce que la matière minérale (e) est choisie parmi les carbonates de calcium naturel et précipité, le talc ou le kaolin, et est préférentiellement un carbonate de calcium naturel.

Un quatrième et dernier objet de l'invention consiste en un procédé de couchage d'un papier support, par dépose sur ledit papier d'une sauce de couchage ayant les caractéristiques telles qu'énoncées précédemment.

Les exemples qui suivent permettront de mieux illustrer l'invention, sans toutefois en limiter la portée.

### EXEMPLES

### Exemple 1

Dans cet exemple, on formule une sauce de couchage, dont la composition est donnée ci-dessous. Une telle sauce peut être typiquement mise en oeuvre en top-couche. Ladite sauce est constituée :
- de 100 parts en poids sec de carbonate de calcium commercialisé par la société OMYA™ sous le nom de Hydrocarb™ 95 ME (95 % en poids des particules ont un diamètre moyen inférieur à 2 µm),
- d'un liant styrène-butadiène commercialisé par la société DOW™ CHEMICALS sous le nom de DL 966, et de taille de particules de 160 nm,
- d'alcool polyvinylique commercialisé par la société CLARIANT™ sous le nom de Mowiol™ 4-98,
- d'un azurant optique commercialisé par la société KEMIRA sous le nom de Blankophor™ P01.

Les quantités (en poids sec par rapport au poids sec de carbonate de calcium) correspondantes sont indiquées dans le tableau 1.
L'extrait sec chaque sauce est fixé à 71,5 % de son poids total.

Dans cet exemple, on teste l'influence de différents additifs sur la viscosité Brookfield™ à 100 tours / minute et à 25°C (Bk en mPa.s dans le tableau 1), et sur sa viscosité ACAV sous un gradient de cisaillement égal à 10⁶ s⁻¹ et à 25°C (ACAV en mPa.s dans le tableau 1). Ces additifs sont soit des modificateurs de rhéologie commerciaux, soit des latex dont on a fait varier la composition (styrène pur ou acide méthacrylique / acrylate d'éthyle / styrène) ainsi que la taille de particules.

### Essai n° 1

Cet essai correspond à une sauce sans additif rhéologique.

### Essai n° 2

Il illustre un domaine hors invention et met en oeuvre 0,2 part en poids de CMC (par rapport au poids sec de carbonate de calcium) commercialisée par la société HUBER™ sous le nom Finfix™ 10.

### Essai n° 3

Il illustre un domaine hors invention et met en oeuvre 0,13 part en poids d'une émulsion acrylique (par rapport aux poids sec de carbonate de calcium) de type ASE commercialisée par la société COATEX™ sous le nom Rheocoat™ 66.

### Essai n° 4

Il illustre un domaine hors invention et met en oeuvre 0,11 part en poids d'une émulsion acrylique (par rapport au poids sec de carbonate de calcium) de type HASE commercialisée par la société COATEX™ sous le nom Rheocoat™ 73.

### Essai n° 5

Il illustre un domaine hors invention et met en oeuvre 2 parts en poids sec (par rapport au poids sec de carbonate de calcium) d'un latex constitué d'acrylate d'éthyle, d'acide méthacrylique et de styrène (59/16/25 en % en poids) et d'une taille de particules égale à 68 nm.

### Essai n° 6

Il illustre un domaine hors invention et met en oeuvre 2 parts en poids sec (par rapport au poids sec de carbonate de calcium) d'un latex constitué d'acrylate d'éthyle, d'acide méthacrylique et de styrène (59/16/25 en % en poids) et d'une taille de particules égale à 160 nm.

### Essai n° 7

Il illustre un domaine hors invention et met en oeuvre 2 parts en poids sec (par rapport au poids sec de carbonate de calcium) d'un latex constitué d'acrylate d'éthyle, d'acide méthacrylique et de styrène (59/16/25 en % en poids) et d'une taille de particules égale à 144 nm.

### Essai n° 8

Il illustre un domaine hors invention et met en oeuvre 2 parts en poids sec (par rapport au poids sec de carbonate de calcium) d'un latex constitué d'acrylate d'éthyle, d'acide méthacrylique, de styrène et de méthacrylate de méthyle (41/5/40/13 en % en poids) et d'une taille de particules égale à 344 nm.

### Essai n° 9

Il illustre l'invention et met en oeuvre 2 parts en poids sec (par rapport au poids sec de carbonate de calcium) d'un latex constitué de styrène uniquement et d'une taille de particules égale à 96 nm.

### Essai n° 10

Il illustre un domaine hors invention et met en oeuvre 2 parts en poids sec (par rapport au poids sec de carbonate de calcium) d'un latex constitué d'acrylate d'éthyle, d'acide méthacrylique et de styrène (41/6/53 en % en poids) et d'une taille de particules égale à 347 nm.

### Essai n° 11

Il illustre un domaine hors invention et met en oeuvre 2 parts en poids sec (par rapport au poids sec de carbonate de calcium) d'un latex constitué d'acrylate d'éthyle, d'acide méthacrylique et de styrène (41/6/53 en % en poids) et d'une taille de particules égale à 281 nm.

### Essai n° 12

Il illustre un domaine hors invention et met en oeuvre 2 parts en poids sec (par rapport au poids sec de carbonate de calcium) d'un latex constitué d'acrylate d'éthyle, d'acide méthacrylique et de styrène (41/6/53 en % en poids) et d'une taille de particules égale à 172 nm.

### Essai n° 13

Il illustre un domaine hors invention et met en oeuvre 2 parts en poids sec (par rapport au poids sec de carbonate de calcium) d'un latex constitué d'acrylate d'éthyle, d'acide méthacrylique et de styrène (41/6/53 en % en poids) et d'une taille de particules égale à 112 nm.

### Essai n° 14

Il illustre un domaine hors invention et met en oeuvre 2 parts en poids sec (par rapport au poids sec de carbonate de calcium) d'un latex constitué d'acrylate d'éthyle, d'acide méthacrylique et de styrène (41/6/53 en % en poids) et d'une taille de particules égale à 67 nm.

### Essai n° 15

Il illustre un domaine hors invention et met en oeuvre 2 parts en poids sec (par rapport au poids sec de carbonate de calcium) d'un latex styrène-butadiène (50/50 en % en poids) et de taille de particules égale à 89 nm.

### Essai n° 16

Il illustre un domaine hors invention et met en oeuvre 2 parts en poids sec (par rapport au poids sec de carbonate de calcium) d'un latex constitué uniquement de styrène et de taille de particules égale à 200 nm.

### Essai n° 17

Il illustre l'invention et met en oeuvre 2 parts en poids sec (par rapport au poids sec de carbonate de calcium) du latex selon l'essai 9 constitué uniquement de styrène et d'une taille de particules égale à 96 nm. De plus, on a ici réduit la quantité de liant principal DL 966 à 6 parts.

L'ensemble des résultats apparaît dans le tableau 1. On note que pour les modificateurs de rhéologie de l'art antérieur (CMC, Rheocoat™ 66 et 73 selon les essais n° 2, 3 et 4) utilisés dans les dosages habituels, se comportent comme des épaississants quel que soit le gradient de vitesse. On a réalisé un essai supplémentaire mettant en oeuvre 2 parts en poids sec de Rheocoat™ 66 (par rapport au poids sec de carbonate de calcium), mais la sauce obtenue était tellement visqueuse qu'il était impossible de mesurer sa viscosité Brookfield™ à 100 tours par minute.

Pour les latex constitués de styrène et d'au moins un autre monomère (dans une quantité bien supérieure à 20 % en poids), on constate qu'aucun d'entre eux ne permet d'augmenter la valeur de la viscosité Brookfield™ à 100 tours / minute et ce, quel que soit leur taille de particules variant entre 67 nm et 347 nm (essais n° 2 à 6 et 8 à 15).

Enfin, pour les 3 latex constitués uniquement de styrène (essais n° 7, 16 et 17), le latex de taille de particules supérieure à 150 nm (200 nm selon l'essai n° 16), ne permet pas d'augmenter à la fois la viscosité Brookfield à 100 tours / minute et de réduire la viscosité ACAV sous un gradient de cisaillement égal à 10⁶ s⁻¹. En revanche, pour l'essai n° 7 qui met en oeuvre 8 parts de liant principal, on observe une très nette augmentation de la viscosité sous bas gradient de cisaillement et une large baisse de la viscosité sous haut gradient.

On démontre ainsi la double influence bénéfique de la composition du latex envisagé, et de sa taille de particules : seul le choix particulier d'un latex constitué de styrène, et d'une taille de particule proche de 100 nm, permet d'augmenter la viscosité sous bas gradient de cisaillement et de la diminuer sous haut gradient. Les sauces résultantes qui sont à extrait sec élevé (71,5 % de leurs poids total) seront donc parfaitement bien adaptées pour être couchées à vitesse élevée.

Enfin, l'essai 17 qui ne met en oeuvre que 6 parts de liant principal démontre qu'on peut conserver le compromis rhéologique décrit ci-dessus, tout en réduisant la part de liant principal.

**TABLEAU 1**

| **Essai n°** | **1** | **2** | **3** | **4** | **5** | **6** | **7** | **8** | **9** | **10** | **11** | **12** | **13** | **14** | **15** | **16** | **17** |
|---|---|---|---|---|---|---|---|---|---|---|---|---|---|---|---|---|---|
| Hydrocarb 95 | 100 | 100 | 100 | 100 | 100 | 100 | 100 | 100 | 100 | 100 | 100 | 100 | 100 | 100 | 100 | 100 | 100 |
| DL 966 | 8 | 8 | 8 | 8 | 8 | 8 | 8 | 8 | 8 | 8 | 8 | 8 | 8 | 8 | 8 | 8 | 6 |
| PVA* | 0,4 | 0,4 | 0,4 | 0,4 | 0,4 | 0,4 | 0,4 | 0,4 | 0,4 | 0,4 | 0,4 | 0,4 | 0,4 | 0,4 | 0,4 | 0,4 | 0,4 |
| Blankophor | 0,5 | 0,5 | 0,5 | 0,5 | 0,5 | 0,5 | 0,5 | 0,5 | 0,5 | 0,5 | 0,5 | 0,5 | 0,5 | 0,5 | 0,5 | 0,5 | 0,5 |
| additif essai 2 | | 0,13 | | | | | | | | | | | | | | | |
| additif essai 3 | | | 0,11 | | | | | | | | | | | | | | |
| additif essai 4 | | | | 0,2 | | | | | | | | | | | | | |
| additif essai 5 | | | | | 2 | | | | | | | | | | | | |
| additif essai 6 | | | | | | 2 | | | | | | | | | | | |
| additif essai 7 | | | | | | | 2 | | | | | | | | | | |
| additif essai 8 | | | | | | | | 2 | | | | | | | | | |
| additif essai 9 | | | | | | | | | 2 | | | | | | | | |
| additif essai 10 | | | | | | | | | | 2 | | | | | | | |
| additif essai 11 | | | | | | | | | | | 2 | | | | | | |
| additif essai 12 | | | | | | | | | | | | 2 | | | | | |
| additif essai 13 | | | | | | | | | | | | | 2 | | | | |
| additif essai 14 | | | | | | | | | | | | | | 2 | | | |
| additif essai 15 | | | | | | | | | | | | | | | 2 | | |
| additif essai 16 | | | | | | | | | | | | | | | | 2 | |
| additif essai 17 | | | | | | | | | | | | | | | | | 2 |
| Bk | 780 | 1540 | 1680 | 1640 | 570 | 580 | 500 | 470 | 1980 | 420 | 460 | 600 | 530 | 460 | 590 | 1120 | 1750 |
| ACAV | 209 | 260 | 273 | 260 | 160 | 150 | 210 | 228 | 172 | 171 | 214 | 193 | 166 | 148 | 182 | 240 | 185 |

| | | | | | | | | | | | | | | | | | |
|---|---|---|---|---|---|---|---|---|---|---|---|---|---|---|---|---|---|
| ^{2*} parts en l'état | | | | | | | | | | | | | | | | | |

### Exemple 2

Dans cet exemple, on formule une sauce de couchage, dont la composition est donnée ci-dessous. Une telle sauce peut être typiquement mise en oeuvre en top-couche. Ladite sauce est constituée :
- de 100 parts en poids sec de carbonate de calcium commercialisé par la société OMYA™ sous le nom de Setacarb™ ME (95 % en poids des particules ont un diamètre moyen inférieur à 2 µm),
- d'un liant styrène-butadiène commercialisé par la société DOW™ CHEMICALS sous le nom de DL 966, et de taille de particules de 160 nm,
- d'alcool polyvinylique commercialisé par la société CLARIANT™ sous le nom de Mowiol™ 4-98,
- d'un azurant optique commercialisé par la société KEMIRA™ sous le nom de Blankophor™ P01.

Les quantités (en poids sec par rapport au poids sec de carbonate de calcium) correspondantes sont indiquées dans le tableau 2.

L'extrait sec de chaque sauce est fixé à 70,5 % de son poids total.

Dans cet exemple, on teste l'influence de différents latex sur la viscosité Brookfield™ à 100 tours / minute et à 25°C (Bk en mPa.s dans le tableau 1), et sur sa viscosité ACAV sous un gradient de cisaillement égal à 10⁶ s⁻¹ et à 25°C (ACAV en mPa.s dans le tableau 1).

Ces latex illustrent l'invention et sont constitués de styrène et d'un autre monomère, mais à raison de moins de 20 % en poids.

### Essai n° 18

Cet essai correspond à une sauce sans additif rhéologique.

### Essai n° 19

Il illustre l'invention et met en oeuvre 2 parts en poids sec (par rapport au poids sec de carbonate de calcium) d'un latex constitué de styrène et d'acide acrylique (85/15 en % en poids) d'une taille de particules égale à 111 nm.

### Essai n° 20

Il illustre l'invention et met en oeuvre 2 parts en poids sec (par rapport au poids sec de carbonate de calcium) d'un latex constitué de styrène et d'acrylate d'éthyle (85/15 en % en poids) d'une taille de particules égale à 111 nm.

L'ensemble des résultats apparaît dans le tableau 2.

**Tableau 2**

| **Essai n°** | **18** | **19** | **20** |
|---|---|---|---|
| Setacarb™ ME | 100 | 100 | 100 |
| DL 966 | 8 | 8 | 8 |
| PVA | 0,4 | 0,4 | 0,4 |
| Blankophor* | 0,5 | 0,5 | 0,5 |
| additif essai 20 | | 2 | |
| additif essai 21 | | | 2 |
| Bk | 360 | 400 | 565 |
| ACAV | 162 | 123 | 115 |

| | | | |
|---|---|---|---|
| *parts en l'état | | | |

On démontre ainsi que la viscosité sous bas gradient de cisaillement peut être augmentée, et celle sous haut gradient diminuée, avec des latex dont la taille de particules est comprise entre 50 et 150 nm, lesdits latex contenant du styrène et moins de 20 % en poids d'un comonomère qui est ici l'acide acrylique ou l'acrylate d'éthyle.

### Exemple 3

Dans cet exemple, on formule 2 sauces de couchage, dont la composition est donnée ci-dessous, et qui diffèrent par la nature du carbonate de calcium mis en oeuvre. Une telle sauce peut être typiquement mise en oeuvre en top-couche. Ladite sauce est constituée :
- de 100 parts en poids sec d'un carbonate de calcium commercialisé par la société OMYA™ sous le nom de Setacarb™ ME (95 % en poids des particules ont un diamètre inférieur à 2 µm), ou Hydrocarb™ 90 (90 % en poids des particules ont un diamètre inférieur à 2 µm),
- d'un liant styrène-butadiène commercialisé par la société DOW™ CHEMICALS sous le nom de DL 966, et de taille de particules de 160 nm,
- d'alcool polyvinylique commercialisé par la société CLARIANT™ sous le nom de Mowiol™ 4-98,
- d'un azurant optique commercialisé par la société KEMIRA™ sous le nom de Blankophor™ P01.

Les quantités (en poids sec par rapport au poids sec de carbonate de calcium) correspondantes sont indiquées dans le tableau 3.
L'extrait sec de chaque sauce est fixé à 70,5 % de son poids total.

Dans cet exemple, on teste l'influence de différents latex sur la viscosité Brookfield™ à 100 tours / minute et à 25°C (Bk en mPa.s dans le tableau 1), et sur sa viscosité ACAV sous un gradient de cisaillement égal à 10⁶ s⁻¹ et à 25°C (ACAV en mPa.s dans le tableau 1).

Ces latex illustrent l'invention et sont constitués uniquement de styrène, dont on a fait varier la taille de particules entre 80 et 140 nm.

### Essai n° 21

Cet essai correspond à une sauce référence contenant du Setacarb™ ME comme charge minérale, sans ajout d'additif rhéologique.

### Essai n° 22

Il illustre l'invention et met en oeuvre 2 parts en poids sec (par rapport au poids sec de carbonate de calcium) d'un latex constitué uniquement de styrène et d'une taille de particules égale à 80 nm.

### Essai n° 23

Il illustre l'invention et met en oeuvre 2 parts en poids sec (par rapport au poids sec de carbonate de calcium) d'un latex constitué uniquement de styrène et d'une taille de particules égale à 102 nm.

### Essai n° 24

Il illustre l'invention et met en oeuvre 2 parts en poids sec (par rapport au poids sec de carbonate de calcium) d'un latex constitué uniquement de styrène et d'une taille de particules égale à 140 nm.

### Essai n° 25

Cet essai correspond à une sauce référence contenant de l'Hydrocarb™ 90 comme charge minérale, sans ajout d'additif rhéologique.

### Essai n° 26

Il illustre l'invention et met en oeuvre 2 parts en poids sec (par rapport au poids sec de carbonate de calcium) du latex utilisé dans l'essai n° 22.

### Essai n° 27

Il illustre l'invention et met en oeuvre 2 parts en poids sec (par rapport au poids sec de carbonate de calcium) du latex utilisé dans l'essai n° 23.

### Essai n° 28

Il illustre l'invention et met en oeuvre 2 parts en poids sec (par rapport au poids sec de carbonate de calcium) du latex utilisé dans l'essai n° 24.

L'ensemble des résultats apparaît dans le tableau 3. Les 3 latex testés satisfont à la résolution du problème technique.
Ceci étant, les meilleurs résultats sont obtenus pour le latex de taille de particules égale à 102 nm, dans le cas du Setacarb™ ME, et pour le latex de taille de particules égale à 80 nm, dans le cas de l'Hydrocarb™ 90. Ces résultats illustrent donc les deux variantes particulières de l'invention.

**Tableau 3**

| **Essai n°** | **21** | **22** | **23** | **24** | **25** | **26** | **27** | **28** |
|---|---|---|---|---|---|---|---|---|
| Setacarb™ ME | 100 | 100 | 100 | 100 | 100 | 100 | 100 | 100 |
| Hydrocarb™ 90 | | | | | 100 | 100 | 100 | 100 |
| DL 966 | 8 | 8 | 8 | 8 | 8 | 8 | 8 | 8 |
| PVA | 0,4 | 0,4 | 0,4 | 0,4 | 0,4 | 0,4 | 0,4 | 0,4 |
| Blankophor* | 0,5 | 0,5 | 0,5 | 0,5 | 0,5 | 0,5 | 0,5 | 0,5 |
| additif essais 22 et 26 | | 2 | | | | 2 | | |
| additif essais 23 et 27 | | | 2 | | | | 2 | |
| additif essais 24 et 28 | | | | 2 | | | | 2 |
| Bk | 360 | 860 | 1350 | 410 | 480 | 1380 | 925 | 510 |
| ACAV | 162 | 146 | 131 | 146 | 106 | 91 | 91 | 109 |

| | | | | | | | | |
|---|---|---|---|---|---|---|---|---|
| * parts en l'état | | | | | | | | |

## Revendications

1. Utilisation d'un latex (a) comme agent permettant d'augmenter la viscosité d'une sauce sous bas gradient de cisaillement et de la diminuer sous haut gradient de cisaillement,
étant entendu que ladite sauce contient de l'eau, (b) au moins un liant, (c) éventuellement au moins un agent modificateur de rhéologie différent dudit latex (a), (d) éventuellement au moins un additif différent des composés précités, et (e) au moins une matière minérale,
**caractérisée en ce que** la sauce contient :
une masse d'eau comprise entre 20 % et 50 % du poids total de ladite sauce, préférentiellement entre 25 % et 45 %,
(a) de 0,1 part à 4 parts en poids sec dudit latex (a) pour 100 parts en poids sec de matière minérale (e), préférentiellement de 0,5 à 4,0 parts,
(b) de 3 parts à 20 parts en poids sec dudit liant (b) pour 100 parts en poids sec de matière minérale (e), préférentiellement de 5 parts à 17 parts,
(c) de 0 part à 1 part en poids sec dudit agent modificateur de rhéologie (c) pour 100 parts en poids sec de matière minérale (e), préférentiellement de 0 à 0,5 part, et
(d) de 0 part à 1 part en poids sec dudit au moins un additif (d) pour 100 parts en poids sec de matière minérale (e), préférentiellement de 0 à 0,5 part.
ledit latex (a) étant **caractérisé en ce que** :
1) il est constitué d'au moins 95 % en poids de styrène par rapport à son poids total, très préférentiellement de 100 % en poids de styrène par rapport à son poids total, et
2) il présente une taille de particules comprise entre 50 et 150 nm, préférentiellement entre 60 et 120 nm.

2. Utilisation selon la revendication 1, **caractérisée en ce que** ledit latex (a) contient de 0,01 à 5 % en poids par rapport à son poids total, d'au moins un monomère choisi parmi le butadiène, l'acrylonitrile, l'acrylamide, les N-méthylolacrylamides, l'acétate de vinyle, l'acide acrylique, les acrylates d'alkyle et préférentiellement parmi les (méth)acrylates d'éthyle et de butyle, les (méth)acrylates d'hydroxyalkyle, ou leurs mélanges, et choisi très préférentiellement parmi les (méth)acrylates d'éthyle et de butyle et leurs mélanges.

3. Utilisation selon une des revendications 1 à 2, **caractérisée en ce que** ledit liant (b) est choisi parmi les latex styrène-butadiène, les styrène-acrylique ou les acétates de vinyle.

4. Utilisation selon une des revendications 1 à 3, **caractérisée en ce que** ledit agent modificateur de rhéologie (c) est choisi parmi les épaississants constitués des copolymères de l'acide (méth)acrylique avec un ester de ces acides, et des copolymères à base d'acide (méth)acrylique, d'un ester de ces acides et d'un monomère hydrophobe, les épaississants à base d'urée, de gélatine, les épaississants à base de vinyle pyrrolidone ou les épaississants à base de cellulose éventuellement modifiée.

5. Utilisation selon une des revendications 1 à 4, **caractérisée en ce que** ledit additif (d) est choisi parmi l'amidon, la caséine, le stéarate de calcium, les azurants optiques et les colorants, l'alcool polyvinylique, les anti-mousses ou les insolubilisants.

6. Utilisation selon une des revendications 1 à 5, **caractérisée en ce que** ladite matière minérale (e) présente une répartition granulométrique telle qu'au moins 60 % en poids des particules ont un diamètre inférieur à 2 µm.

7. Utilisation selon la revendication 6 **caractérisée en ce que** ladite matière minérale (e) présente une répartition granulométrique telle qu'au moins 90 % en poids des particules ont un diamètre inférieur à 2 µm et **en ce que** le latex présente une taille de particules comprise entre 60 nm et 100 nm.

8. Utilisation selon la revendication 7 **caractérisée en ce que** ladite matière minérale (e) présente une répartition granulométrique telle qu'au moins 95 % en poids des particules ont un diamètre inférieur à 2 µm et **en ce que** le latex présente une taille de particules comprise entre 80 nm et 120 nm.

9. Utilisation selon une des revendications 1 à 8, **caractérisée en ce que** la matière minérale (e) est choisie parmi les carbonates de calcium naturel et précipité, le talc ou le kaolin, et est préférentiellement un carbonate de calcium naturel.

10. Sauce de couchage contenant de l'eau, un latex (a), au moins un liant (b), éventuellement au moins un agent modificateur de rhéologie (c) différent du latex (a), éventuellement au moins un additif (d) différent des composés précités, au moins une matière minérale (e),
ledit latex (a) étant **caractérisé en ce que** :
1) il est constitué d'au moins 95 % en poids de styrène par rapport à son poids total, préférentiellement au moins 98 % en poids, très préférentiellement 100 % en poids de styrène par rapport à son poids total, et
2) il présente une taille de particules comprise entre 50 et 150 nm, préférentiellement entre 60 et 120 nm,
et ladite sauce étant **caractérisée en ce qu'**elle contient :
une masse d'eau comprise entre 20 % et 50 % du poids total de ladite sauce, préférentiellement entre 25 % et 45 %,
(a) 0,1 part à 4 parts en poids sec dudit latex (a) pour 100 parts en poids sec de matière minérale (e), préférentiellement de 0,5 à 3,0 parts,
(b) de 3 parts à 20 parts en poids sec de liant (b) pour 100 parts en poids sec de matière minérale (e), préférentiellement de 5 parts à 15 parts,
(c) de 0 part à 1 part en poids sec dudit au moins un agent modificateur de rhéologie (c) pour 100 parts en poids sec de matière minérale (e), préférentiellement de 0 à 0,5 part, et
(d) de 0 part à 1 part en poids sec dudit au moins un additif (d) pour 100 parts en poids sec de matière minérale (e), préférentiellement de 0 à 0,5 part.

11. Sauce de couchage selon la revendication 10, **caractérisée en ce que** ledit latex, contient de 0,01 à 5 % en poids par rapport à son poids total, d'au moins un monomère choisi parmi le butadiène, l'acrylonitrile, l'acrylamide, les N-méthylolacrylamides, l'acétate de vinyle, l'acide acrylique, les acrylates d'alkyle et préférentiellement choisi parmi les (méth)acrylates d'éthyle et de butyle, les (méth)acrylates d'hydroxyalkyle, ou leurs mélanges, et choisi très préférentiellement parmi les (méth)acrylates d'éthyle et de butyle et leurs mélanges.

12. Sauce de couchage selon une des revendications 10 ou 11, **caractérisée en ce que** ledit liant (b) est choisi parmi les latex styrène-butadiène, les styrène-acrylique ou les acétates de vinyle.

13. Sauce de couchage selon une des revendications 10 à 12, **caractérisée en ce que** ledit agent modificateur de rhéologie (c) est choisi parmi les épaississants constitués des copolymères de l'acide (méth)acrylique avec un ester de ces acides, et des copolymères à base d'acide (méth)acrylique, d'un ester de ces acides et d'un monomère hydrophobe, les épaississants à base d'urée, de gélatine, les épaississants à base de vinyle pyrrolidone ou les épaississants à base de cellulose éventuellement modifiée.

14. Sauce de couchage selon une des revendications 10 à 13, **caractérisée en ce que** ledit additif (d) est choisi parmi l'amidon, la caséine, le stéarate de calcium, les azurants optiques et les colorants, l'alcool polyvinylique, les anti-mousses ou les insolubilisants.

15. Sauce de couchage selon une des revendications 10 à 14, **caractérisée en ce que** ladite matière minérale (e) présente une répartition granulométrique telle qu'au moins 60 % en poids des particules ont un diamètre inférieur à 2 µm.

16. Sauce de couchage selon la revendication 15, **caractérisée en ce que** ladite matière minérale (e) présente une répartition granulométrique telle qu'au moins 90 % en poids des particules ont un diamètre inférieur à 2 µm, et **en ce que** le latex présente une taille de particules comprise entre 60 nm et 100 nm.

17. Sauce de couchage selon la revendication 16, **caractérisée en ce que** ladite matière minérale (e) présente une répartition granulométrique telle qu'au moins 95 % en poids des particules ont un diamètre inférieur à 2 µm, et **en ce que** le latex présente une taille de particules comprise entre 80 nm et 120 nm.

18. Sauce de couchage selon une des revendications 10 à 17, **caractérisée en ce que** la matière minérale (e) est choisie parmi les carbonates de calcium naturel et précipité, le talc ou le kaolin, et est préférentiellement un carbonate de calcium naturel.

19. Procédé de couchage d'un papier support, par dépose sur ledit papier d'une sauce de couchage selon une des revendications 10 à 18.

## Patentansprüche

1. Verwendung eines Latex (a) als Mittel zum Erhöhen der Viskosität einer Masse bei niedriger Schergeschwindigkeit und zum Verringern derselben bei hoher Schergeschwindigkeit,
wobei es sich versteht, dass die Masse Wasser, (b) mindestens ein Bindemittel, (c) möglicherweise mindestens ein Mittel zur Modifizierung der Rheologie, welches sich vom Latex (a) unterscheidet, (d) möglicherweise mindestens einen Zusatzstoff, der sich von den vorstehend genannten Verbindungen unterscheidet, und (e) mindestens einen Mineralstoff enthält.
**dadurch gekennzeichnet, dass** die Masse Folgendes enthält:
- eine gewichtsmäßige Menge an Wasser im Bereich von 20 % bis 50 %, vorzugsweise von 25 % bis 45 %, des Gesamtgewichts der Masse,
(a) 0,1 Teile bis 4 Teile, vorzugsweise 0,5 bis 4,0 Teile, nach Trockengewicht von dem Latex (a), auf 100 Teile nach Trockengewicht an Mineralstoff (e),
(b) 3 Teile bis 20 Teile, vorzugsweise 5 bis 17 Teile, nach Trockengewicht von dem Bindemittel (b), auf 100 Teile nach Trockengewicht an Mineralstoff (e),
(c) 0 Teile bis 1 Teile, vorzugsweise 0 bis 0,5 Teile, nach Trockengewicht von dem Mittel zur Modifizierung der Rheologie (c), auf 100 Teile nach Trockengewicht an Mineralstoff (e), und
(d) 0 Teile bis 1 Teile, vorzugsweise 0 bis 0,5 Teile, nach Trockengewicht von dem mindestens einen Zusatzstoff (d), auf 100 Teile nach Trockengewicht an Mineralstoff (e).
wobei der Latex (a) **dadurch gekennzeichnet, dass**:
1) er zu mindestens 95 Gewichts-% aus Styrol besteht, bezogen auf sein Gesamtgewicht, stark bevorzugt zu 100 Gewichts-% aus Styrol, bezogen auf sein Gesamtgewicht, und
2) er eine Partikelgröße im Bereich von 50 bis 150 nm, vorzugsweise von 60 bis 120 nm, aufweist.

2. Verwendung nach Anspruch 1, **dadurch gekennzeichnet, dass** der Latex (a) 0,01 bis 5 Gewichts-%, bezogen auf sein Gesamtgewicht, an mindestens einem Monomer enthält, welches aus Butadien, Acrylnitril, Acrylamid, den N-Methylolacrylamiden, Vinylacetat, Acrylsäure, den Alkylacrylaten, und vorzugsweise aus den Ethyl- und Butyl(meth)acrylaten, den Hydroxyalkyl(meth)acrylaten oder deren Mischungen ausgewählt ist, wobei er stark bevorzugt aus den Ethyl- und Butyl(meth)acrylaten und deren Mischungen ausgewählt ist.

3. Verwendung nach einem der Ansprüche 1 bis 2, **dadurch gekennzeichnet, dass** das Bindemittel (b) aus den Styrol-butadien-latexen, den Styrol-acryl-verbondungen oder den Vinylacetaten ausgewählt ist.

4. Verwendung nach einem der Ansprüche 1 bis 3, **dadurch gekennzeichnet, dass** das Mittel zur Modifizierung der Rheologie (c) aus den Verdickungsmitteln, welche aus Copolymeren der (Meth)aclylsäure mit einem Ester dieser Säuren und aus Copolymeren auf Basis von (Meth)aclylsäure, eines Esters dieser Säuren und eines hydrophoben Monomers bestehen, aus den Verdickungsmitteln auf Basis von Harnstoff, von Gelatine, aus den Verdickungsmittel auf Basis von Pyrrolidon, oder aus den Verdickungsmitteln auf Basis von möglicherweise modifizierter Cellulose ausgewählt ist.

5. Verwendung nach einem der Ansprüche 1 bis 4, **dadurch gekennzeichnet, dass** der Zusatzstoff (d) aus Stärke, Kasein, Calciumstearat, optischen Aufhellern und Farbstoffen, Polyvinylalkohol, Schaumverhütern und Löslichkeitshemmern ausgewählt ist.

6. Verwendung nach einem der Ansprüche 1 bis 5, **dadurch gekennzeichnet, dass** der Mineralstoff (e) eine derartige Korngrößenverteilung zeigt, dass mindestens 60 % Gewichts-% der Partikel einen Durchmesser von weniger als 2 µm haben.

7. Verwendung nach einem der Ansprüche 6, **dadurch gekennzeichnet, dass** der Mineralstoff (e) eine derartige Korngrößenverteilung zeigt, dass mindestens 90 % Gewichts-% der Partikel einen Durchmesser von weniger als 2 µm haben und dadurch, dass der Latex eine Partikelgröße im Bereich von 60 nm bis 100 nm aufweist.

8. Verwendung nach Anspruch 7, **dadurch gekennzeichnet, dass** der Mineralstoff (e) eine derartige Korngrößenverteilung zeigt, dass mindestens 95 % Gewichts-% der Partikel einen Durchmesser von weniger als 2 µm haben und dadurch, dass der Latex eine Partikelgröße im Bereich von 80 nm bis 120 nm aufweist.

9. Verwendung nach einem der Ansprüche 1 bis 8, **dadurch gekennzeichnet, dass** der Mineralstoff (e) aus natürlichem und gefälltem Calciumcarbonat, Talkum oder Kaolin ausgewählt ist, wobei es sich vorzugsweise um ein natürliches Calciumcarbonat handelt.

10. Streichmasse, die Wasser, einen Latex (a), mindestens ein Bindemittel (b), möglicherweise mindestens ein Mittel zur Modifizierung der Rheologie (c), welches sich vom Latex (a) unterscheidet, möglicherweise mindestens einen Zusatzstoff (d), der sich von den vorstehend genannten Verbindungen unterscheidet, mindestens einen Mineralstoff (e) enthält,
wobei der Latex (a) **dadurch gekennzeichnet ist, dass**:
1) er zu mindestens 95 Gewichts-% aus Styrol besteht, bezogen auf sein Gesamtgewicht, vorzugsweise zu mindestens 98 Gewichts-%, stark bevorzugt zu 100 Gewichts-% aus Styrol, bezogen auf sein Gesamtgewicht, und
2) er eine Partikelgröße im Bereich von 50 bis 150 nm, vorzugsweise von 60 bis 120 nm, aufweist,
und die Masse **dadurch gekennzeichnet ist, dass** sie Folgendes enthält:
- eine gewichtsmäßige Menge an Wasser im Bereich von 20 % bis 50%, vorzugsweise von 25 % bis 45 %, des Gesamtgewichts der Streichmasse,
(a) 0,1 Teile bis 4 Teile, vorzugsweise 0,5 bis 3,0 Teile, nach Trockengewicht von dem Latex (a), auf 100 Teile nach Trockengewicht an Mineralstoff (e),
(b) 3 Teile bis 20 Teile, vorzugsweise 5 bis 15 Teile, nach Trockengewicht von dem Bindemittel (b), auf 100 Teile nach Trockengewicht an Mineralstoff (e),
(c) 0 Teile bis 1 Teile, vorzugsweise 0 bis 0,5 Teile, nach Trockengewicht von dem mindestens einen Mittel zur Modifizierung der Rheologie (c), auf 100 Teile nach Trockengewicht an Mineralstoff (e), und
(d) 0 Teile bis 1 Teile, vorzugsweise 0 bis 0,5 Teile, nach Trockengewicht von dem mindestens einen Zusatzstoff (d), auf 100 Teile nach Trockengewicht an Mineralstoff (e).

11. Streichmasse nach Anspruch 10, **dadurch gekennzeichnet, dass** der Latex 0,01 bis 5 Gewichts-%, bezogen auf sein Gesamtgewicht, an mindestens einem Monomer enthält, welches aus Butadien, Acrylnitril, Acrylamid, den N-Methylolacrylamiden, Vinylacetat, Acrylsäure, den Alkylacrylaten, und vorzugsweise aus den Ethyl- und Butyl(meth)acrylaten, den Hydroxyalkyl(meth)acrylaten oder deren Mischungen ausgewählt ist, wobei er stark bevorzugt aus den Ethyl- und Butyl(meth)acrylaten und deren Mischungen ausgewählt ist.

12. Streichmasse nach einem der Ansprüche 10 bis 11, **dadurch gekennzeichnet, dass** das Bindemittel (b) aus den Styrol-butadien-latexen, den Styrol-acryl-Verbindungen oder den Vinylacetaten ausgewählt ist.

13. Streichmasse nach einem der Ansprüche 10 bis 12, **dadurch gekennzeichnet, dass** das Mittel zur Modifizierung der Rheologie (c) aus den Verdickungsmitteln, welche aus Copolymeren der (Meth)aclylsäure mit einem Ester dieser Säuren und aus Copolymeren auf Basis von (Meth)aclylsäure, eines Esters dieser Säuren und eines hydrophoben Monomers bestehen, aus den Verdickungsmitteln auf Basis von Harnstoff, von Gelatine, aus den Verdickungsmittel auf Basis von Pyrrolidon, oder aus den Verdickungsmitteln auf Basis von möglicherweise modifizierter Cellulose ausgewählt ist.

14. Streichmasse nach einem der Ansprüche 10 bis 13, **dadurch gekennzeichnet, dass** der Zusatzstoff (d) aus Stärke, Kasein, Calciumstearat, optischen Aufhellern und Farbstoffen, Polyvinylalkohol, Schaumverhütern und Löslichkeitshemmern ausgewählt ist.

15. Streichmasse nach einem der Ansprüche 10 bis 14, **dadurch gekennzeichnet, dass** der Mineralstoff (e) eine derartige Korngrößenverteilung zeigt, dass mindestens 60 % Gewichts-% der Partikel einen Durchmesser von weniger als 2 µm haben.

16. Streichmasse nach Anspruch 15, **dadurch gekennzeichnet, dass** der Mineralstoff (e) eine derartige Korngrößenverteilung zeigt, dass mindestens 90 % Gewichts-% der Partikel einen Durchmesser von weniger als 2 µm haben und dadurch, dass der Latex eine Partikelgröße im Bereich von 60 nm bis 100 nm aufweist.

17. Streichmasse nach Anspruch 16, **dadurch gekennzeichnet, dass** der Mineralstoff (e) eine derartige Korngrößenverteilung zeigt, dass mindestens 95 % Gewichts-% der Partikel einen Durchmesser von weniger als 2 µm haben und dadurch, dass der Latex eine Partikelgröße im Bereich von 80 nm bis 120 nm aufweist.

18. Streichmasse nach einem der Ansprüche 10 bis 17, **dadurch gekennzeichnet, dass** der Mineralstoff (e) aus natürlichem und gefälltem Calciumcarbonat, Talkum oder Kaolin ausgewählt ist, wobei es sich vorzugsweise um ein natürliches Calciumcarbonat handelt.

19. Verfahren zum Streichen einer Papierunterlage, indem eine Streichmasse nach einem der Ansprüche 10 bis 18 auf das Papier aufgebracht wird.

## Claims

1. Use of a latex (a) as agent making it possible to increase the viscosity of a paper coating under low shear gradient and to decrease it under high shear gradient,
it being understood that said paper coating contains water, (b) at least one binder, (c) possibly a rheology-modifying agent different from said latex (a), (d) possibly at least one additive different from the aforementioned compounds, and (e) at least one mineral matter,
**characterized in that** the paper coating contains:
- a mass of water between 20% and 50% of the total weight of said paper coating, preferentially between 25% and 45%,
(a) from 0.1 part to 4 parts by dry weight of said latex (a) per 100 parts by dry weight of mineral matter (e), preferentially from 0,5 to 4,0 parts,
(b) from 3 parts to 20 parts by dry weight of said binder (b) per 100 parts by dry weight of mineral matter (e), preferentially from 5 parts to 17 parts,
(c) from 0 part to 1 part by dry weight of said rheology-modifying agent (c) per 100 parts by dry weight of mineral matter (e), preferentially from 0 to 0,5 part, and
(d) from 0 to 1 part by dry weight of said at least one additive (d) per 100 parts by dry weight of mineral matter (e), preferentially from 0 to 0,5 part,
said latex (a) being **characterized in that**:
1) it is made up of at least 95% by weight of styrene compared to its total weight, most preferentially from 100% by weight of styrene compared to its total weight, and
2) it exhibits a size of particles between 50 and 150 nm, preferentially between 60 and 120 nm.

2. Use according to claim 1, **characterized in that** said latex (a) contains from 0.01 to 5% by weight compared to its total weight, of at least one monomer chosen from among butadiene, acrylonitrile, acrylamide, N-methylolacrylamides, vinyl acetate, acrylic acid, alkyl acrylates, and preferentially from among ethyl and butyl (meth)acrylates, hydroxyalkyl (meth)acrylates, or mixtures thereof, and chosen most preferentially from among ethyl and butyl (meth)acrylates and mixtures thereof.

3. Use according to one of claims 1 to 2, **characterized in that** said binder (b) is chosen from among styrene-butadiene latexes, styrene-acrylics, or vinyl acetates.

4. Use according to one of claims 1 to 3, **characterized in that** said rheology-modifying agent (c) is chosen from among thickeners made up of copolymers of (meth)acrylic acid with an ester of these acids, and copolymers based on (meth)acrylic acid, of an ester of these acids and of a hydrophobic monomer, urea-based thickeners, gelatin-based thickeners, vinyl pyrrolidone-based thickeners or possibly modified cellulose-based thickeners.

5. Use according to one of claims 1 to 4, **characterized in that** said additive (d) is chosen from among starch, casein, calcium stearate, optical brighteners and dyes, polyvinylic alcohol, defoamers or insolubilizers.

6. Use according to one of claims 1 to 5, **characterized in that** said mineral matter (e) exhibits a particle size distribution such that at least 60% by weight of the particles have a diameter less than 2 µm.

7. Use according to claim 6 **characterized in that** said mineral matter (e) exhibits a particle size distribution such that at least 90% by weight of the particles have a diameter less than 2 µm and **in that** the latex exhibits a size of particles between 60 nm and 100 nm.

8. Use according to claim 7 **characterized in that** said mineral matter (e) exhibits a particle size distribution such that at least 95% by weight of the particles have a diameter less than 2 µm and **in that** the latex exhibits a size of particles between 80 nm and 120 nm.

9. Use according to one of claims 1 to 8, **characterized in that** the mineral matter (e) is chosen from among natural and precipitated calcium carbonates, talc or kaolin, and is preferentially a natural calcium carbonate.

10. Paper coating containing water, a latex (a), at least a binder (b), possibly at least a rheology-modifying agent (c) different from latex (a), possibly at least one additive (d) different from the aforementioned compounds, at least a mineral matter (e),
said latex (a) being **characterized in that**:
1) it is made up of at least 95% by weight of styrene compared to its total weight, more preferentially at least 98% by weight, and most preferentially 100% by weight of styrene compared to its total weight, and
2) it exhibits a size of particles between 50 and 150 nm, more preferentially between 60 and 120 nm,
and said paper coating being **characterized in that** it contains :
- a mass of water between 20% and 50% of the total weight of said paper coating, preferentially between 25% and 45%,
(a) from 0.1 part to 4 parts by dry weight of said latex (a) per 100 parts by dry weight of mineral matter (e), preferentially from 0,5 to 3,0 parts,
(b) from 3 parts to 20 parts by weight of binder (b) per 100 parts by dry weight of mineral matter (e), preferentially from 5 parts to 15 parts,
(c) from 0 part to 1 part by dry weight of said at least a rheology-modifying agent (c) per 100 parts by dry weight of mineral matter (e), preferentially from 0 to 0.5 part, and
(d) from 0 to 1 part by dry weight of said at least an additive (d) per 100 parts by dry weight of mineral matter (e), preferentially from 0 to 0,5 part.

11. Paper coating according to claim 10, **characterized in that** said latex contains 0.01 to 5% by weight compared to its total weight, of at least one monomer chosen from among butadiene, acrylonitrile, acrylamide, N-methylolacrylamides, vinyl acetate, acrylic acid, alkyl acrylates and preferentially chosen from among ethyl and butyl (meth)acrylates, hydroxyalkyl (meth)acrylates, or mixtures thereof, and chosen most preferentially from among ethyl and butyl (meth)acrylates and mixtures thereof.

12. Paper coating according to one of claims 10 or 11, **characterized in that** said binder (b) is chosen from among styrene-butadiene latexes, styrene-acrylics or vinyl acetates.

13. Paper coating according to one of claims 10 to 12, **characterized in that** the said rheology-modifying agent (c) is chosen from among thickeners made up of copolymers of (meth)acrylic acid with an ester of these acids, and copolymers based on (meth)acrylic acid, of an ester of these acids and of a hydrophobic monomer, urea-based thickeners, gelatin-based thickeners, vinyl pyrrolidone-based thickeners or possibly modified cellulose-based thickeners.

14. Paper coating according to one of claims 10 to 13, **characterized in that** said additive (d) is chosen from among starch, casein, calcium stearate, optical brighteners and dyes, polyvinylic alcohol, defoamers or insolubilizers.

15. Paper coating according to one of claims 10 to 14, **characterized in that** said mineral matter (e) exhibits a particle size distribution such that at least 60% by weight of the particles have a diameter less than 2 µm.

16. Paper coating according to claim 15, **characterized in that** said mineral matter (e) exhibits a particle size distribution such that at least 90% by weight of the particles have a diameter less than 2 µm, and **in that** the latex exhibits a size of particles between 60 nm and 100 nm.

17. Paper coating according to claim 16, **characterized in that** said mineral matter (e) exhibits a particle size distribution such that at least 95% by weight of the particles have a diameter less than 2 µm, and **in that** the latex exhibits a size of particles between 80 nm and 120 nm.

18. Paper coating according to one of claims 10 to 17, **characterized in that** the mineral matter (e) is chosen from among natural and precipitated calcium carbonates, talc or kaolin, and is preferentially a natural calcium carbonate.

19. Method for coating a paper based, by deposit onto said paper of a paper coating according to one of claims 10 to 18.
